# EUROPEAN PATENT APPLICATION

(11) **EP 4 667 538 A1**
(43) Date of publication of application: **24.12.2025**
(21) Application number: 24183761.6
(22) Date of filing: 21.06.2024
(51) Int. Cl.: C09D 5/18, C09D 7/63, C09D 131/04, C09K 21/10

(54) **INTUMESCENT COATING COMPOSITION USING GLYCOURIL AND AMINOTRIAZINE COMPOUND AS BLOWING AGENT**

(71) Applicant: CLARIANT INTERNATIONAL LTD, 4132 Muttenz (CH)
(72) Inventor: The designation of the inventor has not yet been filed
(74) Representative: Clariant Produkte (Deutschland) GmbH

(57) **Abstract**

An intumescent coating composition and a coated substrate are described. The intumescent coating composition comprises: (a) a blowing agent comprising glycoluril or an alkylated glycoluril and at least one aminotriazine compound or salts thereof; (b) a polymeric binder; (c) ammonium salts of phosphoric acids and/or polyphosphoric acids as foam-forming substance; (d) carbohydrates as carbon-forming substance; (e) optionally, at least one pigment; and (f) optionally, at least one solvent.

## Description

The present invention relates to an intumescent coating composition with good fire-resistant properties, substrates coated with the intumescent coating composition, a method for preparing the intumescent coating composition, and a method for using the intumescent coating composition to protect structures from fire and heat.

Formulated as a fire-resistant solution for various substrates, an intumescent coating rapidly expands upon exposure to heat or flame, generating an insulative char foam layer once heated beyond a critical temperature. This char foam layer acts as a barrier against fire, heat, and smoke, effectively impeding the spread of flames and heat transfer.

State-of-art intumescent coatings (e.g., EP 3426731; EP 0568354; WO 2015007629) typically contain a resin binder for forming a hard coating, certain foam-forming substance(s) acting as acid-generating catalyst, selected carbon-forming substance(s), and a blowing agent. Blowing agents decompose in a fire, releasing gases that cause the coating to expand and form a foam-like structure, thereby increasing the coating's volume and insulating properties.

However, while a more expanded foamed char layer is associated with better fire resistance performance, it is also easier to crush due to insufficient mechanical strength. Hence, there is a need for an intumescent coating capable of generating a mechanically stable foam char with desirable fire performance.

WO 1996003854 addresses this problem by providing a coating system with two layers of different density. To make use of this bilayer coating system, it is required to separately coating and curing two layers on a substrate, notably complicated the usual practice of single layer coating.

EP 3022263 describes an alternative approach to provide an intumescent coating with the strength/performance balances. This approach relies on the addition of specific amounts of metal/metalloid atoms from a combination of at least two different and specific sources of metal/metalloid atoms in an organic intumescent coating composition.

The primary objective of the present invention is to provide a new intumescent coating composition capable of producing a robust foam layer with mechanical stability and desirable fire resistance. By utilizing a novel combination of blowing agents, the aim is to offer a solution that maintains the existing coating procedure and minimizes complexities in the coating recipe. This innovative approach seeks to deliver a more straightforward and universally applicable solution for enhancing intumescent coatings, ultimately improving their ability to form a durable and effective char foam layer under fire or heat exposure.

This objective is achieved by providing an intumescent coating composition comprising:
(a) a blowing agent comprising glycoluril or an alkylated glycoluril and at least one aminotriazine compound or salt thereof;
(b) a polymeric binder;
(c) ammonium salts of phosphoric acids and/or polyphosphoric acids as foam-forming substance;
(d) carbohydrates as carbon-forming substance;
(e) optionally, at least one pigment; and
(f) optionally, at least one solvent.

Glycoluril, chemically known as tetrahydroimidazo-[4,5-d] imidazole-2,5(1H,3H)-dione, is commercially available and can be synthesized by reacting two molar equivalents of urea with glyoxal.

For the purpose of the present invention, "alkylated glycoluril" refers to partially or fully alkylated derivatives of glycoluril, wherein one or more hydrogen atoms attached to the nitrogen atoms in the urea groups are replaced with alkyl groups. Examples of alkylated glycolurils include, but unlimited to tetramethyl glycoluril, tetraethyl glycoluril, dimethyl glycoluril, hexamethyl glycoluril, tetrabutoxymethyl glycoluril, tetramethoxymethyl glycoluril, and dimethoxymethyl diethoxymethyl glycoluril.

Manufacturing methods of alkylated glycolurils are known in the art and typically begin with the provision of glycoluril as a base compound. An alkylating agent, such as an alkyl halide, is then introduced in the presence of a suitable base, which serves to deprotonate the nitrogen atoms on the glycoluril, thereby facilitating the nucleophilic attack on the alkyl halide. The reaction is commonly carried out in a solvent that can dissolve both the reactants and the product, often under reflux conditions to enhance reaction rates and yield. The specific choice of alkylating agent and solvent, along with reaction temperature and time, is adjusted based on the desired alkyl group and the specific alkylated glycoluril being synthesized. Earlier patents in the art, such as US 4064191, have disclosed various manufacturing method examples.

According to the present invention, the at least one aminotriazine compound can be selected from a group consisting of melamine, melem, acetoguanamin, ammeline, ammelide, melam, melon, benzoguanamin, tetramethoxymethylbenzoguanamine, caprinoguanamine and butyroguanamine, and can be preferably selected from a group consisting of melamine, melem, and acetoguanamin.

In one preferred embodiment, the at least one aminotriazine compound is selected from melem, acetoguanamin, and a mixture thereof. In one particularly preferred embodiment, the at least one aminotriazine compound consists of a mixture of melem and acetoguanamin.

In one embodiment of the present invention, the at least one aminotriazine compound comprises melamine. In an alternative embodiment, the invented intumescent coating composition is free of melamine.

For an intumescent coating composition according to the present invention, the blowing agent may comprise:
1.0% to 99.9% by weight of glycoluril or an alkylated glycoluril, preferably 30.0% to 99.5%, and more preferably 50.0% to 99.5%; and
0.1% to 99.0% by weight of at least one aminotriazine compound, preferably 0.5% to 70.0%, and more preferably 0.5% to 50.0%.

The polymeric binders employed in the present invention are generally film-forming binders known to those skilled in the art of intumescent coatings, such as those described in US 10072163. Suitable polymeric binders may include (co)polymers derived from (co)monomers such as vinyl acetate, vinyl acetate-ethylene, or vinyl acetate-VeoVa. Other suitable (co)polymers may be selected from a group of acrylic-styrene, acrylic-vinyl toluene, styrene-butadiene, vinyl toluene-butadiene, styreneacrylonitrile, vinyl toluene-acrylonitrile, diisocyanate-polyol, polylactic acid, polyurethane, polyurethane dispersions, polyurethane-epoxide hybrids, vinyl alcohol, vinyl butyral, urea-formaldehyde, melamine-formaldehyde, alkyl phenol-formaldehyde, and vinyl chloride-vinylidene chloride, polysiloxanes and silanes, or resins derived from epoxides with amino-functional curing agents, or from a dicarboxylic acid and a polyol with fatty acid modifiers.

Within this context, 'acrylic monomer' refers to any suitable alkyl(alk)acrylate or (alk)acrylic acid, including, but not limited to, methyl methacrylate, ethyl methacrylate, methyl acrylate, ethyl acrylate, methacrylic acid, acrylic acid, n-butyl acrylate, iso-butyl acrylate, t-butyl acrylate, n-butyl methacrylate, iso-butyl methacrylate, t-butyl methacrylate, 2-ethylhexyl methacrylate, 2-ethylhexyl acrylate, lauryl methacrylate, lauryl acrylate, cyclohexyl acrylate, cyclohexyl methacrylate, isobornyl acrylate, isobornyl methacrylate, hydroxy-functional acrylates such as 2-hydroxyethyl methacrylate, hydroxypropylethyl methacrylate, 2-hydroxyethyl acrylate, hydroxypropyl acrylate, and their mixtures.

A preferred example of polymeric binder used by the present invention is a copolymer based on vinyl acetate and vinyl ester.

The intumescent coating of the present invention comprises ammonium salts of phosphoric acids and/or polyphosphoric acids as foam-forming substance.

The aforementioned ammonium salts are preferably nitrogen-containing phosphates, specially ammonium polyphosphates, which may be represented by the formulas (NH₄)_{y}H_{3-y}PO₄ or (NH₄PO₃)_{z}, where y is 1 to 3 and z is 1 to 10000.

The ammonium polyphosphate used by the present invention preferably exists in one of several crystalline forms, namely phase I, II, III, IV, V, or VI, or as mixtures thereof.

For the purpose of the invention, the ammonium polyphosphate may be microencapsulated with organofunctional silanes, melamine-formaldehyde resins and/or epoxy resins and emulsions based on (meth)acrylate resins, on styrene/acrylate copolymers, urethanes, on ethylene/vinyl acetate copolymers, on rubber or mixtures thereof.

The intumescent coating of the present invention also comprises carbohydrates as carbon-forming substances. Preferably, the carbohydrates used are selected from a group consisting of pentaerythritol, dipentaerythritol, tripentaerythritol and polycondensates of pentaerythritol.

The intumescent coating of the present invention may comprise at least one pigment. Suitable pigments are known to those skilled in the art of intumescent coatings, including but not limited to TiO₂, carbon black, iron oxide, aluminum trihydrate (ATH), antimony trioxide, chromates and molybdates, phthalocyanine, Ultramarine Blue, and Complex Inorganic Color Pigments (CICPs). Preferably TiO₂ or carbon black is used.

The intumescent coating of the present invention may be solvent free, or solvent based. If solvent based, the intumescent coating may comprise at least one aqueous or organic solvent. Examples of organic solvent includes isopropanol, ethanol, butanol, ethylene glycol, propylene glycol, acetone, methyl ethyl ketone (MEK), toluene, xylene and other aliphatic and/or aromatic hydrocarbon solvents.

In a preferred embodiment, the intumescent coating comprises at least one aqueous solvent. In one particularly preferred embodiment, the intumescent coating is water based.

The intumescent coating composition of the present invention may contain further assistant and additive substances known to those skilled in the art. Examples of these further assistant and additive substances include glass fibers, mineral fibers, kaolin, talc, aluminum oxide, aluminum hydroxide, magnesium hydroxide, precipitated silicas, silicates and pulverized celluloses.

Preferably, an intumescent coating composition of the present invention comprises:
(a) 2% to 25% by weight of a blowing agent comprising glycoluril or an alkylated glycoluril and at least one aminotriazine compound, preferably 5% to 20%, and more preferably 5% to 15%;
(b) 5% to 70% by weight of a polymeric binder, preferably 10% to 50%, and more preferably 10% to 35%;
(c) 5% to 40% by weight of ammonium salts of phosphoric acids and/or polyphosphoric acids as foam-forming substance, preferably 10% to 40%, and more preferably 15% to 35%;
(d) 5% to 25% by weight of carbohydrates as carbon-forming substance, preferably 5% to 20%, and more preferably 10% to 20%;
(e) optionally, 5% to 25% by weight of at least one pigment; and
(f) optionally, 10% to 40% by weight of at least one solvent, preferably 15% to 35%, and more preferably 15% to 30%,
wherein the weight percentages of components (a) to (f) are calculated based on the total weight of the intumescent coating composition.

The intumescent coating composition may further comprise:
(g) 0.1% to 10% by weight of a thickener, and
(h) 0.1% to 10% by weight of dispersing additives,
wherein the weight percentages of components (g) and (h) are calculated based on the total weight of the intumescent coating composition.

Additionally, an aforementioned intumescent coating composition may further comprise:
(i) 1% to 20% by weight of assistant and additive substances selected from a group consisting of glass fibers, mineral fibers, kaolin, talc, aluminum oxide, aluminum hydroxide, magnesium hydroxide, precipitated silicas, silicates and pulverized celluloses,
calculated based on the total weight of the intumescent coating composition.

The invention also relates to the use of the aforementioned intumescent coating composition for coating of building materials or structural elements in a building. Examples include but unlimited to coating steel constructions such as steel beams and supports, ceilings, walls, cables, pipes, conduits, cable and combination bulkheads, doors, curtains, smoke barriers, blinds, safety cabinets, installation cabinets and the like.

The invention also relates to the use of aforementioned intumescent coating composition for fire protecting surfaces of a material selected from the group consisting of metal, wood, paper, mineral wool, polymer, concrete, glass fibers, synthetic or natural fibers, and textiles, particularly for fire protecting a steel surface.

The aforementioned intumescent coating composition may also be used for coating electrical switches and circuits.

The invention is further related to a coated substrate wherein the coating comprises an intumescent coating composition as aforementioned. The substrate is preferably a metal or polymer substrate.

### Examples

Hereinafter, the present invention is described in more detail and specifically with reference to the Examples, which however are not intended to limit the present invention.

### 1. Components used

### Blowing agent:

Glycoluril (97%, from Thermo Scientific Chemicals)
Melamine (Melafine^{®} Grade 003, by OCI MELAMINE)
Acetoguanamin (2,4-Diamino-6-methyl-1,3,5-triazin, 96%, from Fisher Scientific GmbH)
Melem (Exolit^{®} 775, by Clariant)

### Polymeric binder:

Mowilith^{®} LDM 2301 (from Celanese), which is an aqueous copolymer dispersion based on vinyl acetate and vinyl ester.

### Foam-forming substance:

### Exolit^{®} AP 422 (by Clariant)

This is a free-flowing, pulverulent, poorly-soluble-in-water ammonium polyphosphate of formula (NH₄PO₃)ₙ where n = 20 to 1000, in particular 500 to 1000. The proportion of particles having a particle size smaller than 45 µm is more than 99%.

### Carbon-forming substance:

Charmor^{™} PM40 (a micronized Pentaerythritol derivative, by Perstorp)

### Pigment:

Titanium dioxide, Ti-Pure^{™} R-900 (by Chemours)

### Dispersing additive

OROTAN^{™} 1124 (a hydrophilic copolymer, by Dow)

### Thixotroping agent

Optigel^{®} WX (a specially selected and activated smectite product, by BYK)

The intumescent coating formulations of the invention, subsequently applied as fire protection coatings, were prepared as follows:
a) At room temperature, water was initially charged as the solvent, and the respective thixotropic and dispersing agents were added and stirred. Subsequently, the pigment, blowing agent, the carbon source and ammonium polyphosphate were incorporated into the mixture while stirring.
b) The polymeric binder was then added to the mixture with stirring at low rpm ton ensure integration.
c) The resultant mixture was dispersed for 15 minutes using high shear forces while maintaining a temperature below 40°C.
d) Viscosity and homogeneity of the mixture were adjusted as necessary through the addition of further solvent or thixotropic agent.
e) Following preparation, the formulation was allowed to sit for 24 hours at room temperature.

The coating formulation examples (comparative Examples 1-2 and inventive Examples 3-6 were thus prepared following the recipe of Table 1 below.

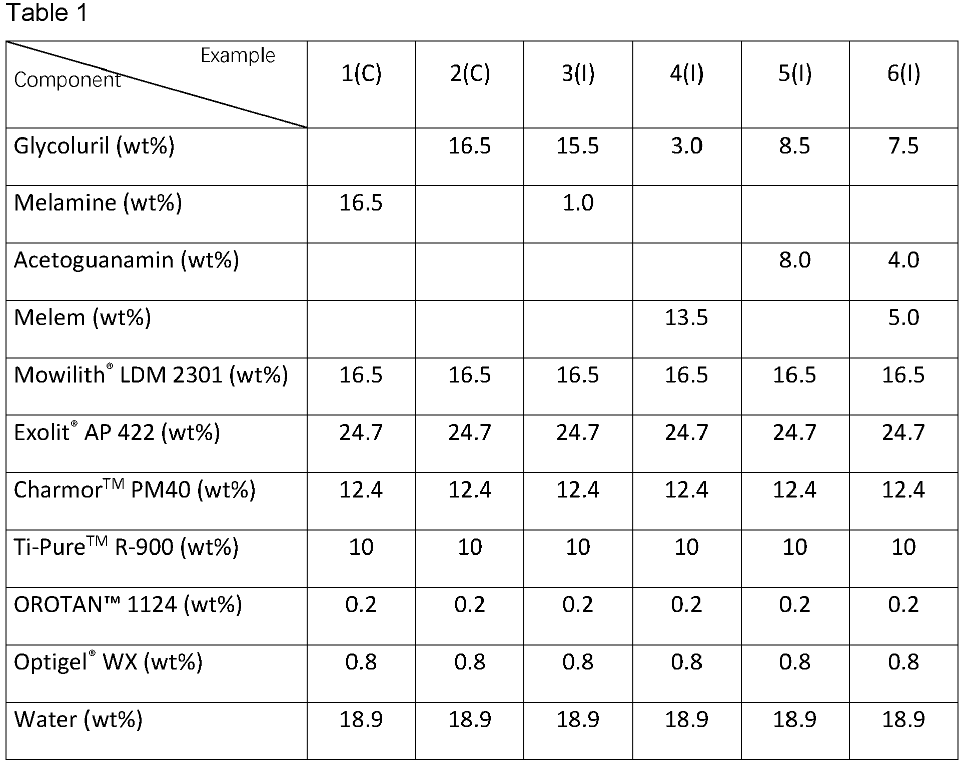

For application testing, each intumescent coating formulation example was then applied as an intumescence coating to sandblasted steel plates with dimensions of 280 mm by 280 mm by 5 mm (width, height, depth). Before applying the formulation, the steel plates were pre-treated with a standard primer system (zinc phosphate- or epoxide- based) to enhance adhesion. The coating was evenly applied using a roller until it reached a dry film thickness of 1000 µm, as determined gravimetrically. The coated test plates were left to dry at room temperature for two weeks to ensure proper curing. Finally, the fire resistance performance of the coated plates was evaluated in accordance with DIN 4102, utilizing the cellulosic fire curve to assess the coating's efficacy under standardized conditions. The obtained fire resistance times (FRT) obtained from testing various coated plates are presented in table 2 below. The critical temperature (T_{critical})for these FRT tests was set at 500 °C, as this is the temperature at which steel begins to soften, posing significant risks in construction damage. The FRT here is defined as the duration it took for the temperature to reach 500°C for these coated plates.

**Table 2**

| | Blowing Agent(s) | Expansion x-fold | FRT [min.] |
|---|---|---|---|
| Example 1 (C) | Melamine | 4.0 | 80 |
| Example 2 (C) | Glycoluril | 3.5 | 70 |
| Example 3 (I) | Glycoluril / Melamine | 3.6 | 70 |
| Example 4 (I) | Glycoluril / Melem | 3.6 | 71 |
| Example 5 (I) | Glycoluril / Acetoguanamin | 4.7 | 73 |
| Example 6 (I) | Glycoluril / Acetoguanamin / Melem | 3.8 | 75 |

According to the data presented in the preceding table, the fire resistance performance of the inventive Examples 3-6 is equivalent to that of the comparative Examples 1-2, both representing traditional formulations of intumescent coatings using standard blowing agents.

The mechanical stability of the char formed by each coating example (measured work required to crush the char formed by an intumescent formulation) was also investigated at room temperature, by a laboratory test. The test employed a controllable crushing device (Instron, Model 5565 Universal testing machine) to apply force to the char layer with a planar surface. The force was measured during the compression of the char layer. The force (F) needed to achieve a compression to 75% of the original char layer height was recorded in Newton (N) units. The corresponding pressure (P) was calculated by dividing the recorded force (F) by the area of the contacting planar surface (A). This calculated pressure is subsequently referred to as compressive strength (P) and is listed in Table 3 below for each tested char layer, reflecting their mechanical stability.

**Table 3**

| Char layer formed from | Blowing Agent(s) | Compressive Strength P (N/mm²) |
|---|---|---|
| Example 1 (C) | Melamine | 0.156 |
| Example 2 (C) | Glycoluril | 0.246 |
| Example 3 (I) | Glycoluril / Melamine | 0.635 |
| Example 4 (I) | Glycoluril / Melem | 0.705 |
| Example 5 (I) | Glycoluril / Acetoguanamin | 0.641 |
| Example 6 (I) | Glycoluril / Acetoguanamin / Melem | 0.696 |

As indicated by the data presented in the preceding table, char layers formed from the inventive Examples 3-6 clearly have superior mechanical stability than those formed from the comparative Examples 1-2, because larger compressive strength is needed to compress their char layers to the same extent. This superiority is crucial as it ensures the char layer remains intact and effective under fire conditions, thereby preserving structural integrity and the insulative properties necessary to meet safety standards and extend the survival time of structural elements during a fire.

It should be emphasized that the compositions and coatings described above are merely preferred exemplary embodiments. Those skilled in the art may modify these in numerous ways without deviating from the scope of the invention, as defined by the claims. Specifically, variations in the concentrations of the respective components are permissible, provided that the resulting compound retains sufficient fire protection suitability.

## Claims

1. An intumescent coating composition comprising:
(a) a blowing agent comprising glycoluril or an alkylated glycoluril and at least one aminotriazine compound or salt thereof;
(b) a polymeric binder;
(c) ammonium salts of phosphoric acids and/or polyphosphoric acids as foam-forming substance;
(d) carbohydrates as carbon-forming substance;
(e) optionally, at least one pigment; and
(f) optionally, at least one solvent.

2. An intumescent coating composition of claim 1, wherein the at least one aminotriazine compound is selected from a group consisting of melamine, melem, acetoguanamin, ammeline, ammelide, melam, melon, benzoguanamin, tetramethoxymethylbenzoguanamine, caprinoguanamine and butyroguanamine.

3. An intumescent coating composition of claim 1, wherein the at least one aminotriazine compound is selected from a group consisting of melamine, melem, and acetoguanamin.

4. An intumescent coating composition of claim 1, wherein the at least one aminotriazine compound comprises melamine.

5. An intumescent coating composition of claim 1, wherein the coating composition is free of melamine.

6. An intumescent coating composition of claim 1, wherein the at least one aminotriazine compound is selected from melem, acetoguanamin, and a mixture thereof.

7. An intumescent coating composition according to claim 6, wherein the at least one aminotriazine compound consists of a mixture of melem and acetoguanamin.

8. An intumescent coating composition according to any one of the preceding claims, comprising at least one solvent.

9. An intumescent coating composition according to claim 8, comprising at least one aqueous solvent.

10. An intumescent coating composition according to any one of the preceding claims, wherein the blowing agent comprises:
1.0% to 99.9% by weight of glycoluril or an alkylated glycoluril, preferably 30.0% to 99.5%, and more preferably 50.0% to 99.5%; and
0.1% to 99.0% by weight of at least one aminotriazine compound, preferably 0.5% to 70.0%, and more preferably 0.5% to 50.0%.

11. An intumescent coating composition according to any one of the preceding claims, comprising:
(a) 2% to 25% by weight of a blowing agent comprising glycoluril or an alkylated glycoluril and at least one aminotriazine compound, preferably 5% to 20%, and more preferably 5% to 15%;
(b) 5% to 70% by weight of a polymeric binder, preferably 10% to 50%, and more preferably 10% to 35%;
(c) 5% to 40% by weight of ammonium salts of phosphoric acids and/or polyphosphoric acids as foam-forming substance, preferably 10% to 40%, and more preferably 15% to 35%;
(d) 5% to 25% by weight of carbohydrates as carbon-forming substance, preferably 5% to 20%, and more preferably 10% to 20%;
(e) optionally, 5% to 25% by weight of at least one pigment; and
(f) optionally, 10% to 40% by weight of at least one solvent, preferably 15% to 35%, and more preferably 15% to 30%,
wherein the weight percentages of components (a) to (f) are calculated based on the total weight of the intumescent coating composition.

12. An intumescent coating composition according to claim 11, the composition further comprising:
(g) 0.1% to 10% by weight of a thickener, and
(h) 0.1% to 10% by weight of dispersing additives,
wherein the weight percentages of components (g) and (h) are calculated based on the total weight of the intumescent coating composition.

13. An intumescent coating composition according to any one of claims 1-12 for use in coating of building materials or structural elements in a building.

14. The intumescent coating composition according to any one of claims 1-12 for use in fire protecting surfaces of a material selected from the group consisting of metal, wood, paper, mineral wool, polymer, concrete, glass fibers, synthetic or natural fibers, and textiles, particularly for fire protecting a steel surface.

15. A coated substrate wherein the coating comprises an intumescent coating composition according to any one of claims 1-12.
